# EUROPÄISCHE PATENTSCHRIFT

(11) **EP 3 207 386 B1**
(45) Veröffentlichungstag und Bekanntmachung des Hinweises auf die Patenterteilung: **12.09.2018**
(21) Anmeldenummer: 14821594.0
(22) Anmeldetag: 17.12.2014
(51) Int. Cl.: G01R 31/28, G01R 31/317, G05B 19/042

(54) **ÜBERPRÜFEN EINES FUNKTIONSMODULS EINER AUTOMATISIERUNGSANLAGE**
CHECKING A FUNCTIONAL MODULE OF AN AUTOMATION SYSTEM
CONTRÔLE D'UN MODULE FONCTIONNEL D'UN SYSTÈME D'AUTOMATISATION

(43) Veröffentlichungstag der Anmeldung: 23.08.2017
(73) Patentinhaber: Siemens Aktiengesellschaft, 80333 München (DE)
(72) Erfinder: NEUHÄUSSER, Martin Richard, 90461 Nürnberg (DE)
(86) Internationale Anmeldenummer: PCT/EP2014/078278
(87) Internationale Veröffentlichungsnummer: WO 2016/095993

(56) Entgegenhaltungen:
- EP-A1- 2 237 123
- EP-A2- 2 645 190
- US-A1- 2011 015 890

## Beschreibung

Die Erfindung betrifft ein Verfahren zum Überprüfen einer Kompatibilität eines Funktionsmoduls, das für eine Anlage zur Prozessautomatisierung bestimmt ist. Das Funktionsmodul ist dazu vorgesehen, mit der Anlage über eine Eingangsschnittstelle und eine Ausgangsschnittstelle zu kommunizieren. Über die Eingangsschnittstelle empfängt das Funktionsmodul zumindest ein Eingangssignal und über die Ausgangsschnittstelle gibt es zumindest ein Ausgangssignal aus. Es soll überprüft werden, ob das Funktionsmodul für die Anlage geeignete Ausgangssignale erzeugt und ob die Anlage das Funktionsmodul mit korrekten Eingangssignalen versorgen kann. Zu der Erfindung gehört auch ein Engineeringsystem zum Durchführen des Verfahrens.

In einer Anlage zur Prozessautomatisierung, oder kurz einer Automatisierungsanlage, kann die Regelung oder Steuerung eines Prozesses auf der Grundlage von speicherprogrammierbaren Steuerungen (SPS) oder PLCs (PLC - Programmable Logic Controller) durchgeführt werden. Damit eine speicherprogrammierbare Steuerung die jeweils benötigten korrekten Steuerschritte oder Regelungsschritte ausführt, wird die speicherprogrammierbare Steuerung mittels eines Steuerprogramms konfiguriert oder parametriert oder projektiert. Dieses Steuerprogramm kann durch einen Funktionsblock oder mehrere Funktionsblöcke bereitgestellt werden. Alternativ zu programmierbaren Steuerungen können auch dedizierte Steuerschaltungen bereitgestellt werden.

Im Folgenden wird auf einen Funktionsblock und eine Funktionsschaltung einheitlich mit "Funktionsmodul" Bezug genommen. Jedes Funktionsmodul implementiert eine spezifische Funktionalität durch Einlesen von zumindest einem Eingangssignal, das jeweils durch eine zeitliche Abfolge von Eingangswerten beschrieben ist. Aus dem zumindest einen Eingangssignal wird zumindest ein Ausgangssignal berechnet, das wiederum jeweils eine zeitliche Abfolge von Ausgangswerten darstellt. Beispielsweise kann ein Funktionsmodul zum Steuern eines Antriebs eines Fließbandes als Eingangssignale zum einen die Fördergeschwindigkeit und zum anderen den Betriebsstatus eines in einer Förderanlage vorgeschalteten oder vorgelagerten Fließbandes empfangen und als Ausgangssignal die Fördergeschwindigkeit des eigenen Fließbandes entsprechend anpassen.

Zum Ausstatten einer Anlage mit passenden Funktionsmodulen ist man aus wirtschaftlichen Gründen daran interessiert, bereits fertig entwickelte Funktionsmodule, die ursprünglich für andere Anlagen gedacht waren, weiter zu nutzen. Insbesondere ist es auch vorteilhaft, Funktionsmodule von fremden Herstellern, beispielsweise des Herstellers der jeweils zu steuernden Anlagenkomponente, übernehmen zu können, so dass eigene Entwicklungsarbeit völlig entfällt.

Das Wiederverwenden von Funktionsmodulen oder die Nutzung fremder Funktionsmodule hat sich als Fehlerquelle beim Konfigurieren oder Projektieren einer Anlage herausgestellt. Beispielsweise kann ein älteres Funktionsmodul unter anderen Annahmen entwickelt worden sein. Das beschriebene Funktionsmodul zum Steuern des Fließbandes kann beispielsweise eine Höchstgeschwindigkeit vorsehen, die kleiner ist als die tatsächlich verfügbare Höchstgeschwindigkeit bei dem aktuell zu steuernden Fließband, das beispielsweise einen leistungsstärkeren Motor aufweisen kann. Eine solche Begrenzung kann aber erst bei Einsatz des Funktionsmoduls in der neuen Anlage festgestellt werden und dann nur unter extremen Bedingungen. Unter Umständen wird die falsch konfigurierte Höchstgeschwindigkeit erst in einem produktiven Betrieb festgestellt und kann zu einer Beschädigung der Anlage oder des Produktionsguts führen.

Eine zweite Fehlerquelle ist die Codierung der Eingangssignale und Ausgangssignale, die sich durch Weiterentwicklung der Hardware verändern kann. Beispielsweise kann bei einem alten Förderbandsystem vorgesehen sein, einen Stillstand des Förderbands durch einen negativen Eingangswert für die Fördergeschwindigkeit zu signalisieren. Bei einem moderneren Förderband kann sowohl eine positive als auch eine negative Fördergeschwindigkeit ermöglicht sein, weil beispielsweise der Antrieb das Förderband auch in die entgegengesetzte Richtung bewegen kann. Würde ein Funktionsmodul nun ein Eingangssignal mit negativen Eingangswerten empfangen, so würde dies zu einer Fehlinterpretation des Anlagenzustands führen.

Die Übernahme eines Funktionsmoduls von einem fremden Hersteller birgt das zusätzliche Risiko, dass das Funktionsmodul nur stichprobenartig getestet werden kann, da in der Regel die eigentliche Programmierung, das heißt der Quellcode, nicht einsehbar ist. Man muss sich hier auf die Angaben des Herstellers verlassen. Hierbei gibt es dann auch keine Garantie, ob der Hersteller das Funktionsmodul für alle möglichen Eingangswerte auch tatsächlich überprüft hat.

Aus der EP 2 237 123 ist bereits ein Verfahren zur dezentralen Kompatibilitätsprüfung zwischen Komponenten in einem Automatisierungssystem bekannt wobei Die Komponenten dabei dazu ausgelegt sind, ein Eingangssignal zu empfangen und in Abhängigkeit von diesem Eingangssignal ein Ausgangssignal zu erzeugen.

Der Erfindung liegt die Aufgabe zugrunde, ein Funktionsmodul für eine Anlage zur Prozessautomatisierung dahingehend überprüfen zu können, ob es sich kompatibel zu den Anforderungen verhalten kann, die es in der Anlage erfüllen soll.

Die Aufgabe wird durch die Gegenstände der unabhängigen Patentansprüche gelöst. Vorteilhafte Weiterbildungen der Erfindung ergeben sich durch die Merkmale der abhängigen Patentansprüche.

Erfindungsgemäß bereitgestellt wird ein Verfahren zum Überprüfen einer Kompatibilität eines Funktionsmoduls für eine Anlage zur Prozessautomatisierung. Das Verfahren geht davon aus, dass das Funktionsmodul dazu ausgelegt ist, über eine Eingangsschnittstelle zumindest ein Eingangssignal von der Anlage zu empfangen und in Abhängigkeit von dem zumindest einen Eingangssignal zumindest ein Ausgangssignal zu erzeugen und das erzeugte zumindest eine Ausgangssignal über eine Ausgangsschnittstelle an die Anlage auszugeben. Bei dem Funktionsmodul kann es sich beispielsweise um eine Steuerungsschaltung oder um einen Funktionsblock z.B. für die Konfiguration einer speicherprogrammierbaren Steuerung handeln. Ein Funktionsblock ist also ein Programmcode.

Das Verfahren sieht in einem ersten Verfahrensschritt vor, für die Eingangsschnittstelle eine Eingangsspezifikation bereitzustellen, welche für das zumindest eine Eingangssignal, also beispielsweise ein Geschwindigkeitssignal und/oder ein Temperatursignal, alle jeweils von dem Funktionsmodul als gültig akzeptierten Eingangswerte angibt. Mit anderen Worten beschreibt die Eingangsspezifikation alle Zustände des zumindest einen Eingangssignals, für die das Funktionsmodul ausgelegt ist. Sieht das Funktionsmodul beispielsweise nicht die Verarbeitung einer negativen Geschwindigkeitsangabe vor, so kann die Eingangsspezifikation für ein Eingangssignal "Geschwindigkeit" angeben, so dass also nur Eingangswerte größer als und gleich Null vorgesehen sind.

In einem weiteren Verfahrensschritt wird für die Ausgangsschnittstelle eine Ausgangsspezifikation bereitgestellt. Die Ausgangsspezifikation gibt für das zumindest eine Ausgangssignal alle jeweils von dem Funktionsmodul bei erfüllter Eingangsspezifikation bestimmungsgemäß vorgesehenen Ausgangswerte an. Mit anderen Worten beschreibt die Ausgangsspezifikation für das zumindest eine Ausgabesignal, welche jeweiligen Ausgangswerte sich ergeben sollten oder können, falls das Funktionsmodul nur mit den zulässigen Eingangswerten betrieben wird und das Funktionsmodul korrekt funktioniert. Es muss keine genaue Wertezuordnung vorliegen, also nicht einem bestimmten Eingangswert der funktionsgemäß vorgesehene Ausgangswert zugeordnet sein. Es können für die Eingangsspezifikation und die Ausgangsspezifikation jeweilige Wertebereichsangaben. Die Ausgangsspezifikation kann aber aus eine Formel aufweisen, deren Variablen durch die Eingangswerte gebildet sind.

In einem weiteren Verfahrensschritt wird vor einem Betreiben des Funktionsmoduls in der Anlage, also in einem Modultest, durch eine Analyseeinrichtung überprüft, ob für jedes gemäß der Eingangsspezifikation an der Eingangsschnittstelle erzeugte Eingangssignal auch tatsächlich an der Ausgangsschnittstelle durch das Funktionsmodul ausschließlich das zumindest eine Ausgangssignal gemäß der Ausgangsspezifikation erzeugt wird. Mit anderen Worten wird das Funktionsmodul auf der Grundlage der Eingangsspezifikation und der Ausgangsspezifikation unabhängig von der Anlage auf Spezifikationskonformität getestet oder überprüft. Falls zumindest ein Ausgangswert des zumindest einen Ausgangssignals die Ausgangsspezifikation verletzt, wird durch die Analyseeinrichtung ein Modulfehler signalisiert. Der Modulfehler zeigt also an, dass das Funktionsmodul nicht spezifikationskonform arbeitet.

Durch die Erfindung ergibt sich der Vorteil, dass mittels der Analyseeinrichtung für ein Funktionsmodul in einem Trockenlauf, das heißt ohne tatsächlich in der Anlage betrieben zu werden, festgestellt werden kann, ob die Eingangsspezifikation und die Ausgangsspezifikation das Funktionsmodul korrekt beschreiben. Es reicht nun also aus, die Eingangsspezifikation und die Ausgangsspezifikation mit einer Anlagenkonfiguration von Anlagenkomponenten der Anlage, die mit dem Funktionsmodul das zumindest eine Eingangssignal und das zumindest eine Ausgangssignal austauschen, abzugleichen. Daran ist erkennbar, ob die Anlage einerseits und das Funktionsmodul andererseits miteinander kompatibel sind. Die beschriebene Überprüfung des Funktionsmoduls wird im Folgenden auch als Funktionsverifikation bezeichnet.

In einer vorteilhaften Weiterbildung der Erfindung wird durch die Analyseeinrichtung aus einem Funktionsprogramm des Funktionsmoduls, also einer computerlesbaren Beschreibung der Funktion des Funktionsmoduls ein Modulmodell gebildet. Das Funktionsprogramm beschreibt, wie aus dem zumindest einen Eingangssignal das zumindest eine Ausgangssignal gebildet wird. Das Funktionsprogramm kann z.B. ein Programmtext für ein FPGA (Field Programmable Gate Array) oder ASIC (Application-Specific Integrated Circuit) oder eine SPS sein.

Das Modulmodell bildet damit ein Modulverhalten des Funktionsmoduls an der Ausgangsschnittstelle nach. Durch die Analyseeinrichtung wird auf der Grundlage des Modulmodells mittels einer Modellprüfung (englisch: model checking)das zumindest eine Ausgangssignal auf seine Konformität bezüglich der Ausgangsspezifikation überprüft. Methoden zur Modellprüfung sind an sich aus dem Stand der Technik bekannt. Ein Beispiel hierfür ist die Modellprüfung auf der Grundlage eines SMT-Lösers (SMT-solver, SMT - Satisfiability Modulo Theories). Durch Bilden eines Modulmodells und Nutzen einer Modellprüfung ergibt sich der Vorteil, dass die Überprüfung der Ausgangsspezifikation mathematisch vollständig durchgeführt werden kann. Dies ist beispielsweise auf der Grundlage von einer Simulation nur mit sehr hohem Aufwand oder sogar gar nicht möglich.

In einer Weiterbildung der Erfindung wird aus einem Programmcodetext, also zumindest einer Datei, welche das besagte Funktionsprogramm des Funktionsmoduls enthält, und der Eingangsspezifikation und der Ausgangsspezifikation zusammen ein digitales Zertifikat erzeugt. Hierdurch ergibt sich der Vorteil, dass einem Dritten gegenüber und/oder auch zu einem späteren Zeitpunkt auf einfache Weise nachgewiesen werden kann, dass ein bestimmtes Funktionsmodul eine bestimmte Eingangsspezifikation und eine bestimmte Ausgangsspezifikation erfüllt. Dies kann einfach dadurch überprüft werden, indem ein weiteres Mal die Eingangsspezifikation, der Programmcodetext und die Ausgangsspezifikation zu einem zweiten digitalen Zertifikat kombiniert werden und das ursprüngliche Zertifikat und das weitere Zertifikat verglichen werden.

In einer Weiterbildung der Erfindung wird in der Anlage das Funktionsmodul nicht allein bereitgestellt, sondern es werden auch die Eingangsspezifikation und Ausgangsspezifikation zusammen mit dem Funktionsmodul als ein erweitertes Funktionsmodul in der Anlage bereitgestellt. Hierdurch ergibt sich der Vorteil, dass beim Projektieren oder Konfigurieren oder Parametrieren der Anlage vor dem Einfügen des Funktionsmoduls in die Anlage anhand der Eingangsspezifikation und der Ausgangsspezifikation eine automatisierte Überprüfung der Kompatibilität des Funktionsmoduls in Bezug auf die spezifische und/oder aktuelle Anlagenkonfiguration durchgeführt werden kann.

Um diese automatisierte Überprüfung des Funktionsmoduls zu ermöglichen, ist eine geeignete Notation des Eingangsspezifikation und der Ausgangsspezifikation nötig. Eine vorteilhafte Weiterbildung der Erfindung sieht hierzu vor, dass die Eingangsspezifikation und/oder die Ausgangsspezifikation jeweils als Prädikatenlogik bereitgestellt wird. Eine Spezifikation in Form einer Prädikatenlogik ist beispielsweise: Geschwindigkeit ≥ 0. Dies besagt, dass das Eingangssignal "Geschwindigkeit" keine Eingangswerte aufweisen darf, die negativ sind. Die Verwendung einer Prädikatenlogik weist den Vorteil auf, dass Annahmen und Behauptungen, die von einem Entwickler bei der Entwicklung eines Funktionsmoduls gemacht wurden, direkt in maschinenlesbare Spezifikationen umgesetzt werden können. Besonders vorteilhaft ist es, wenn eine Prädikatenlogik erster Ordnung und/oder eine quantorfreie Prädikatenlogik verwendet wird. Hierdurch vereinfacht sich in vorteilhafter Weise die Überprüfung der Eingangsspezifikation und/oder der Ausgangsspezifikation drastisch. Eine Prädikatenlogik höherer Ordnung und/oder eine Prädikatenlogik mit Quantor würde zum Beispiel die Aussage enthalten: "Es existiert ein Geschwindigkeits-Eingangswert, welcher in einem Geschwindigkeits-Ausgangswert größer als Null resultiert". Ein solcher sogenannter Existenz-Quantor ist automatisiert nur unzureichend überprüfbar.

In einer bevorzugten Weiterbildung der Erfindung wird als der beschriebene Modulfehler nicht einfach nur signalisiert, dass das Funktionsmodul gegen die Spezifikationen verstößt, sondern es wird ein Gegenbeispiel ausgegeben, welches für das zumindest eine Eingangssignal den jeweiligen Eingangswert angibt, welcher den zumindest einen Ausgangswert ergibt, durch welchen die Ausgangsspezifikation verletzt wird. Hierdurch ergibt sich der Vorteil, dass systematisch nach dem zugrundeliegenden Fehler im Funktionsmodul gesucht werden kann.

In einer Weiterbildung der Erfindung wird durch die Analyseeinrichtung zusätzlich überprüft, ob das zumindest eine Eingangssignal, das durch die Anlage an der Eingangsschnittstelle erzeugt wird, die Eingangsspezifikationen erfüllt. Mit anderen Worten werden also hier die Eingangsspezifikationen nicht als Voraussetzungen oder Annahmen angesehen, von denen das Funktionsmodul ausgeht, sondern als Behauptungen oder Bedingungen, die die Anlage erfüllen muss, damit an der Eingangsschnittstelle das zumindest eine Eingangssignal korrekt für den Betrieb des Funktionsmoduls in der Anlage erzeugt wird. Falls zumindest ein Eingangswert des zumindest einen von der Anlage erzeugten Eingangssignals die Eingangsspezifikation verletzt, wird eine Falschnutzung des Funktionsmoduls signalisiert. Mit anderen Worten wird signalisiert, dass die Anlage das zumindest eine Eingangssignal nicht korrekt erzeugt, so dass das Funktionsmodul also nicht bestimmungsgemäß in der Anlage genutzt werden kann. Hierdurch ergibt sich der Vorteil, dass eine für den Betrieb des Funktionsmoduls falsche Konfiguration der Anlage erkannt werden kann.

Eine Weiterbildung sieht hierzu vor, dass derjenige Anlagenzustand signalisiert wird, in welchem der zumindest eine die Eingangsspezifikation verletzende Eingangswert von der Automatisierungsanlage erzeugt wird. Hierdurch ergibt sich der Vorteil, dass der Fehler in der Anlage gezielt ermittelt werden kann.

Um möglichst vollständig alle möglichen, von der Anlage potentiell erzeugbaren Eingangswerte zu ermitteln, sieht eine Weiterbildung der Erfindung vor, dass durch die Analyseeinrichtung auf der Grundlage einer Anlagenkonfiguration von Anlagenkomponenten der Anlage ein Anlagenmodell gebildet wird. Die Anlagenkonfiguration von Anlagenkomponenten der Anlage beschreibt diejenigen Parameterwerte und/oder Konfigurationswerte und/oder Programmierungen der Anlagenkomponenten, durch welche das Anlagenverhalten der Anlage bezüglich der Eingangsschnittstelle beschrieben ist. Das genannte Anlagenmodell bildet entsprechend das Anlagenverhalten an der Eingangsschnittstelle nach. Die Falschnutzung wird entsprechend mittels einer Modellprüfung ermittelt. Wie bereits im Zusammenhang mit der Modellprüfung für das Funktionsmodul beschrieben, kann hierdurch in mathematisch vollständiger Weise die Einhaltung der Eingangsspezifikation durch die Anlage an der Eingangsschnittstelle überprüft werden. Eine andere Bezeichnung für Anlagenkonfiguration ist auch Anlagenprojektierung.

Die beschriebene Überprüfung der Anlage wird im Folgenden auch als Umgebungsverifikation für das Funktionsmodul bezeichnet.

Zu der Erfindung gehört auch ein Engineeringsystem zum Konfigurieren oder Projektieren einer Anlage zur Prozessautomatisierung. Ein Engineeringsystem kann eine oder mehrere Prozessoreinrichtungen, beispielsweise Computer-Arbeitsstationen, aufweisen und mit der Anlage beispielsweise über ein Kommunikationsnetzwerk, beispielsweise einem IP-basierten Netzerk (IP - Internet Protocol) und/oder einem Feldbus, verbunden sein. Das erfindungsgemäße Engineeringsystem weist eine Analyseeinrichtung auf, beispielsweise ein Programmmodul, welche dazu eingerichtet ist, eine Ausführungsform des erfindungsgemäßen Verfahrens durchzuführen. Das erfindungsgemäße Engineeringsystem weist den Vorteil auf, dass mit ihm ein Funktionsmodul vor dem Einfügen in die Anlage, beispielsweise vor dem Speichern des Funktionsmoduls in einer speicherprogrammierbaren Steuerung oder vor dem Anschließen des Funktionsmoduls, zunächst auf der Grundlage der Eingangsspezifikation und der Ausgangsspezifikation auf seine Kompatibilität zu der Anlage überprüft werden kann. Hierdurch können Fehler im Betrieb der Anlage vermieden werden.

Im Folgenden ist ein Ausführungsbeispiel der Erfindung beschrieben. Hierzu zeigt:
- FIG 1: eine schematische Darstellung einer Ausführungsform des erfindungsgemäßen Engineeringsystems,
- FIG 2: eine Skizze zu einem erweiterten Funktionsmodul, wie es durch eine Ausführungsform des erfindungsgemäßen Verfahrens bereitgestellt werden kann,
- FIG 3: das erweiterte Funktionsmodul von FIG 2, wie es in dem Engineeringsystem für eine Funktionsverifikation eines Funktionsprogramms des Funktionsmoduls verwendet werden kann, und
- FIG 4: das erweiterte Funktionsmodul in der Form, wie es für eine Umgebungsverifikation in der Anlage genutzt werden kann.

Bei dem im Folgenden erläuterten Ausführungsbeispiel handelt es sich um eine bevorzugte Ausführungsform der Erfindung. Bei dem Ausführungsbeispiel stellen aber die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

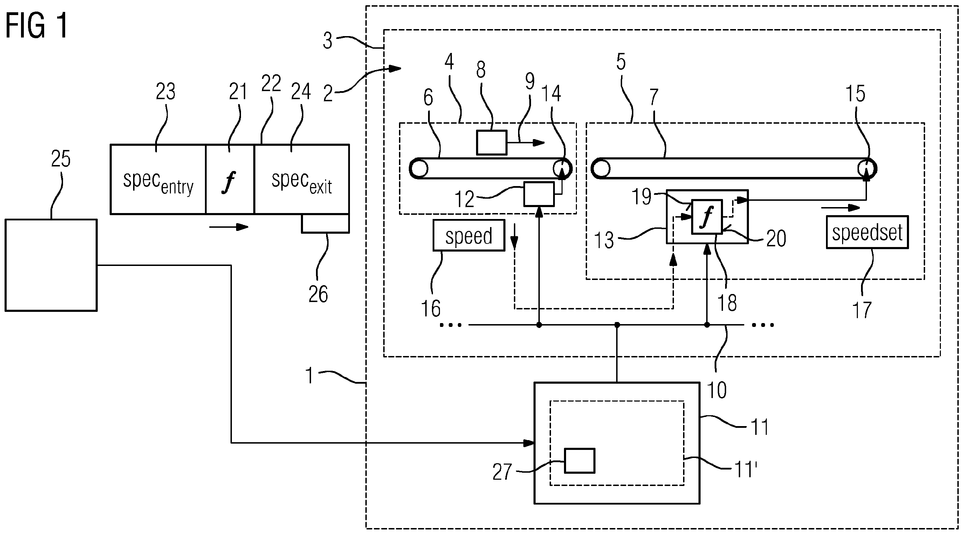

FIG 1 zeigt eine Anlage 1, bei der es sich beispielsweise um eine Produktionsanlage oder eine Prozesssteuerungsanlage oder eine Signalsteuerungsanlage handeln kann. Eine Fertigungsanlage kann beispielsweise zum Herstellen eines Produkts, beispielsweise von Kraftfahrzeugen, vorgesehen sein. Eine Prozesssteuerungsanlage kann beispielsweise zum Regeln oder Steuern eines Verfahrensablaufes bereitgestellt sein, beispielsweise zur Herstellung elektrischer Energie aus Kernkraft. Eine Signalsteuerungsanlage kann beispielsweise zum Steuern eines Ampelsystems in einem Stadtteil vorgesehen sein.

Die Anlage 1 kann zum Regeln und/oder Steuern eines Prozesses 2 in einem Feld 3, beispielsweise einer Industriehalle oder dem genannten Stadtteil, eine oder mehrere Anlagenkomponenten 4, 5 aufweisen, von denen in FIG 1 nur beispielhaft die beiden Anlagenkomponenten 4, 5 dargestellt sind. Beispielsweise können die Anlagenkomponenten 4, 5 jeweils ein Fließband 6, 7 aufweisen, über welches ein Stückgut 8 entlang einer Förderrichtung 9 mit einer vorbestimmten Geschwindigkeit gefördert werden soll. In dem gezeigten Beispiel wird das Stückgut 8 zunächst durch das Förderband 6 gefördert und anschließend an das Förderband 7 übergeben, welches das Stückgut 8 weiterfördert. Die Anlagenkomponenten 4, 5 können in der Anlage 1 über eine Kommunikationseinrichtung 10, beispielsweise einen Feldbus, wie beispielsweise einen Profinet-Bus, gekoppelt sein. Über die Kommunikationseinrichtung 10 können die Anlagenkomponenten 4, 5 und auch die weiteren, nicht dargestellten Anlagenkomponenten, Kommunikationsdaten austauschen.

Die Anlage 1 kann des Weiteren ein Engineeringsystem 11 aufweisen, durch welches die Anlagenkomponenten 4, 5 konfiguriert oder parametriert oder projektiert werden können.

Beispielsweise kann jede Anlagenkomponente 4, 5 jeweils eine speicherprogrammierbare Steuerung 12, 13 aufweisen. Beispielsweise kann bei dem Förderband 6 die Steuerung 12 einen Antriebsmotor 14 regeln oder steuern, so dass das Förderband 6 das Stückgut 8 mit eine vorgegebenen Fördergeschwindigkeit transportiert oder fördert. Die Steuerung 13 kann ebenfalls beispielhaft einen Antrieb 15 des Förderbands 7 steuern, so dass das Stückgut 8 auf dem Förderband 7 mit einer vorgegebenen Fördergeschwindigkeit befördert oder transportiert wird.

Damit die Steuerung 13 die Anlagekomponente 5 in der Anlage 1 in der benötigten Weise steuert, um den Prozess in der Anlage 1 durchzuführen, kann vorgesehen sein, dass die Anlagenkomponente 5 in Abstimmung mit der Anlagenkomponente 4 betrieben wird, damit die Fördergeschwindigkeiten der Förderbänder 6, 7 beispielsweise gleich sind. Hierzu kann beispielsweise die Anlagekomponente 4, insbesondere die Steuerung 12, ein Statussignal 16 beispielsweise über die Kommunikationseinrichtung 10 an die Steuerung 13 übermitteln. Das Statussignal 16 kann beispielsweise ein Geschwindigkeitssignal (speed - Geschwindigkeit) mit jeweiligen aktuellen Geschwindigkeitswerten des Förderbands 6 sein.

Die Steuerung 13 kann ein Funktionsmodul 18 aufweise, welches ein Steuersignals 17 für den Antrieb 15 in Abhängigkeit von dem Statussignal 16 der Steuerung 12 erzeugen kann. Das Funktionsmodul 18 kann beispielsweise ein Programmmodul der Steuerung 13 sein. Das Funktionsmodul 18 kann beispielsweise eine Schaltung oder eine Steckkarte mit einem programmierbaren Prozessor sein. Das Steuersignal 17 stellt ein Ausgangssignal des Funktionsmoduls 18 dar. Das Steuersignal 17 kann z.B. ein Geschwindigkeitssetzsignal speedset für den Antrieb 15 darstellen. Das Funktionsmodul 18 kann das Statussignal 16 der Steuerung 12 beispielsweise über die Kommunikationseinrichtung 10 empfangen. Das Statussignal 16 stellt somit ein Eingangssignal dar.

Das Eingangssignal kann von dem Funktionsmodul 18 an einer Eingangsschnittstelle 19 empfangen werden. An der Eingangsschnittstelle 19 ist in vorbestimmter Weise eine Signalübergabe des Eingangssignals an das Funktionsmodul 18 vorgegeben. In Abhängigkeit von dem Eingangssignal oder mehreren Eingangssignalen kann durch das Funktionsmodul 18 das Steuersignal 17 als Ausgangssignal erzeugt werden. Das Funktionsmodul 18 kann das Ausgangssignal und mögliche weitere Ausgangssignale an einer Ausgangsschnittstelle 20 bereitstellen. An der Ausgangsschnittstelle 20 kann das Ausgangssignal von der Steuerung 13 entgegengenommen und beispielsweise an den Antrieb 15 übertragen werden.

In dem Beispiel ist vorgesehen, dass mittels des Engineeringsystems 11 die speicherprogrammierbare Steuerung 13 neu konfiguriert wird. Bei der Steuerung 13 soll das Funktionsmodul 18 durch ein neues Funktionsmodul 21 ersetzt werden. Alternativ dazu kann auch vorgesehen sein, dass die Anlage 1 in einem Neuzustand ist und die Steuerung 13 zum ersten Mal ein neues Funktionsmodul 21 erhalten soll, das heißt ein Funktionsmodul 21 in der Steuerung 13 bereitgestellt werden soll. Hierbei muss sichergestellt werden, dass das Funktionsmodul 21 nur mit Eingangssignalen an der Eingangsschnittstelle 19 beaufschlagt wird, die durch das Funktionsmodul 21 auch verarbeitet werden können. Des Weiteren muss sichergestellt werden, dass das Funktionsmodul 21 Ausgangssignale an der Ausgangsschnittstelle 20 erzeugt, die in der Anlage zu dem gewünschten Verhalten der Anlagenkomponente 5 führen.

Im Zusammenhang mit der folgenden Erläuterung der Erfindung ist von dem Engineeringsystem 11 wichtig, dass es eine Analyseeinrichtung 11' aufweisen kann, durch welche eine Ausführungsform des erfindungsgemäßen Verfahrens durchgeführt werden kann. Die Analyseeinrichtung 11' kann z.B. eine Programmmodul einer Prozessoreinrichtung des Engineeringsystems 11 sein.

Das Funktionsmodul 21 wird nicht allein, sondern als erweitertes Funktionsmodul 22 bereitgestellt, welches zusätzlich zu dem Funktionsmodul 21 noch eine Eingangsspezifikation 23 und eine Ausgangsspezifikation 24 umfasst. Das erweiterte Funktionsmodul 22 kann beispielsweise durch einen externen Entwickler oder Hersteller 25 bereitgestellt sein, welcher den Anlagenbetreiber der Anlage 21 mit dem erweiterten Funktionsmodul 22 beliefert. Bevor das Funktionsmodul 21 in der Steuerung 13 eingesetzt oder bereitgestellt wird, kann durch die Analyseeinrichtung 11' des Engineeringsystems 11 eine Überprüfung des Funktionsmoduls 21 auf der Grundlage der Eingangsspezifikation 23 und der Ausgangsspezifikation 24 vorgenommen werden, da das erweiterte Funktionsmodul 22 sämtliche benötigten Informationen beinhaltet.

Zusätzlich kann vorgesehen sein, dass zum erweiterten Funktionsmodul 22 ein Zertifikat 26 bereitgestellt wird, welches auf der Grundlage der Eingangsspezifikation 23, der Ausgangsspezifikation 24 und eines Programmtextes des Funktionsmoduls 21 gebildet sein kann. Beispielsweise kann eine Hash-Funktion zum Erzeugen des Zertifikats 26 genutzt werden. Des Weiteren bestätigt das Zertifikat 26, dass für die Eingangsspezifikation 23 das Funktionsmodul 21 die Ausgangsspezifikation 24 erfüllt. Mittels des Zertifikats 26 kann in dem Engineeringsystem 11 in automatisierter Form, das heißt ohne ein Zutun eines Benutzers, durch erneutes Berechnen des digitalen Zertifikats ermittelt werden, ob der Programmtext des Funktionsmoduls 21 identisch mit demjenigen ist, der vom Hersteller 25 zum Überprüfen der Ausgangsspezifikation 24 unter der Maßgabe der Eingangsspezifikation 23 genutzt worden ist.

Das Engineeringsystem 11 kann eine Modellprüfung 27 umfassen, welche das erweiterte Funktionsmodul 22 in zweierlei Hinsicht überprüfen kann. Es kann eine Verifikation des Funktionsmoduls 21 selbst in Bezug auf die Ausgangsspezifikation 24 unter der Annahme erfolgen, dass lediglich Eingangssignale gemäß der Eingangsspezifikation 23 vorliegen. Des Weiteren kann überprüft werden, ob die Anlage 1 an der Eingangsschnittstelle 19 lediglich solche Eingangssignale erzeugt, die auch zu Eingangswerten gemäß der Eingangsspezifikation 23 führen.

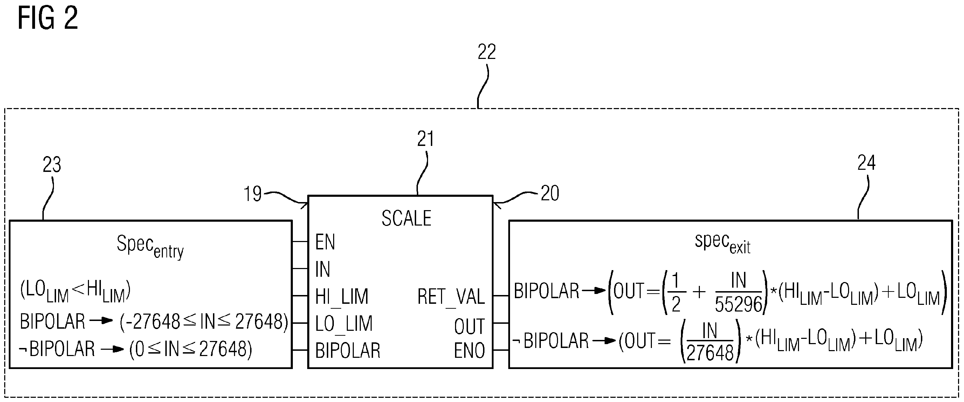

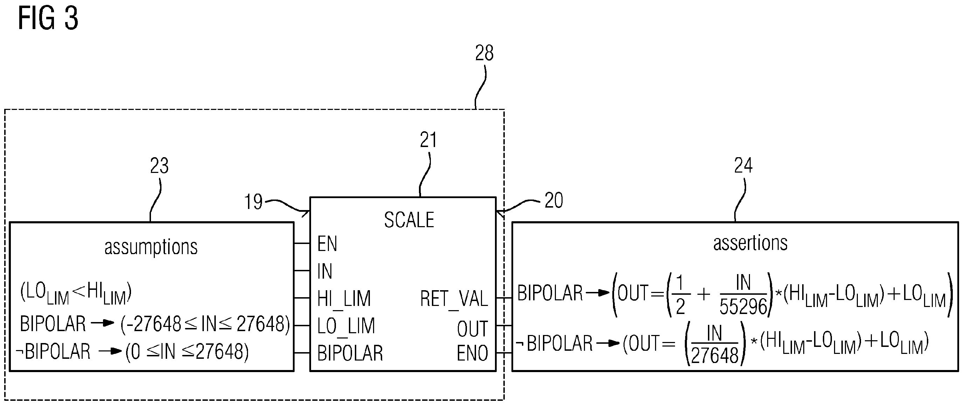

Hierzu wird im Folgenden auf FIG 2, FIG 3 und FIG 4 verwiesen. FIG 3 zeigt noch einmal, wie das Funktionsmodul 21 an seiner Eingangsschnittstelle 19 um die Eingangsspezifikation 23 erweitert worden ist und das Funktionsmodul 21 an seiner Ausgangsschnittstelle 20 um die Ausgangsspezifikation 24 erweitert worden ist.

Eingangs- und Ausgangsspezifikationen können als Annahmen und Behauptungen angesehen werden, wobei die Eingangsspezifikation abhängig vom Verifikationsproblem (Wiederverwendbarkeit/Funktionsverifikation oder Umgebungsverifikation) als Annahme oder als Behauptung interpretiert wird, die Ausgangsspezifikation wird als Behauptung eingestuft oder werden vermieden).

FIG 3 veranschaulicht, wie die Eingangsspezifikationen 23 als Annahmen (assumptions)und die Ausgangsspezifikation 24 als Behauptungen (assertions) behandelt werden, um die Funktionstüchtigkeit des Funktionsmoduls 21 zu verifizieren.

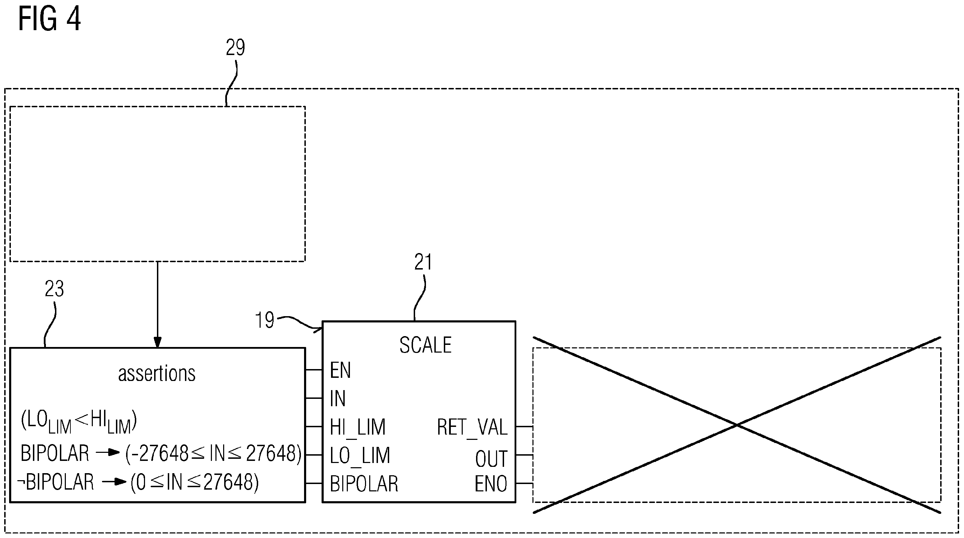

FIG 4 veranschaulicht, wie die Eingangsspezifikation 23 als Behauptung zugrundegelegt wird, um das Anlagenverhalten zu verifizieren, das heißt eine Umgebungsverifikation für das Funktionsmodul 21 durchzuführen.

Mittels einer formalen Überprüfungstechniken (z.B. der Modellprüfung 27) kann die Gültigkeit der Ergebnisannahmen und -behauptungen auf Grundlage des Funktionscodes des Funktionsmoduls 21 nachgewiesen werden. Wenn die Überprüfung fehl schlägt, können Gegenbeispiele angeboten werden, die einen Verstoß der verbundenen Funktionsspezifikationen beschreiben.

Die Eingangsspezifikation 23 und die Ausgangsspezifikation 24 können jeweils gewichtungsfreie Formeln der Prädikatenlogik erster Ordnung(QF = quantifier free first order formulas), umfassen, die an das Funktionsmodul 21 angehängt werden können. Dies kann an jeder beliebigen Position des Funktionsmoduls sein. Ein Beispiel für solch eine QF-Formel ist für einen Geschwindigkeits-Parameter speed ≥ 0. Die Behauptungen und Annahmen sind beide QF-Formeln, die sich jedoch in ihrer Interpretation unterscheiden:
Behauptung: Es ist ein Fehler, wenn es möglich ist, während des Ausführens eines PLC-Programms eine Behauptung zu treffen, die gegen das QF-Formel durch die aktuellen Werte des Parameters, also einer Programmvariablen, verstoßen. Zum Beispiel wird ein Fehlerbericht angezeigt, wenn die Behauptung speed < 0 durch einen Negativwert in der Variable speed getroffen werden kann.
Annahme: Auf der anderen Seite wird nur ein Funktionsmodul, der mit einer Annahme speed ≥ 0 erweitert wird, für die nicht-negativen Werte des variablen speed analysiert. Die Möglichkeit, dass das speed einen Negativwert aufzeigt, wird ignoriert, da es gegen die Annahme verstößt. Daher wird der Negativwert eines Eingangswerts speed ausgefiltert anstatt als Fehler berichtet.
Behauptungen und Annahmen sind dual: Behauptungen formalisieren eine Bedingung, die erfüllt werden muss, vorausgesetzt alle Annahmen sind erfüllt. Annahmen stellen eine Einschränkung der variablen Werte dar, so wie ein Programmierer die Inputwerte interpretiert.

Es lässt sich somit ein erweiterter Funktionsmodul als "triple" (specentry, *f*, specexit) definieren, indem *f* der Code (z.B. in jeglichen automatischen IEC61131-3-konformen Programmsprachen) und die Signatur der Funktion (oder des Funktionsmoduls) ist, sowie specentry eine Eingangsspezifikation und specexit eine Ausgangsspezifikation ist. specentry und specexit sind beide jeweils QF-Formeln.

Ein Beispiel für das erweiterte Funktionsmodul 22 ist in FIG 2 gezeigt. Es erläutert wesentliche Eingangs- und Ausgangsspezifikationen 23, 24 für eine Funktion SCALE, die als Funktionsmodul 21 Teil einer Standardbibliothek für einen PLC sein kann. Im Wesentlichen erläutert die Eingangsspezifikation 23, dass SCALE unter der Annahme entwickelt wurde, dass der Inputwert IN innerhalb des Intervalls [0,27648] für unipolare Inputs und in [-27648, -27648] für bipolare Inputs liegt und dass das reellwertige Intervall durch die Inputs LOLIM und HILIM zuverlässig definiert wird (z.B. LOLIM ≤ HILIM). Unter diesen Annahmen produziert SCALE garantiert einen Outputwert OUT, der das Ergebnis der Skalierung vom Input IN gemäß der Polarität und des Outputintervalls [LOLIM, HILIM] darstellt.

Auf Grundlage der oben genannten Definitionen lässt sich eine Lösung für eine Überprüfung des Funktionsmoduls 21 bereitstellen. Grundlegend an der Lösung ist die Interpretation der Eingangs- und Ausgangsspezifikationen des erweiterten Funktionsmoduls 22. Abhängig vom Problem (Wiederverwendbarkeit oder Funktionsverifikation oder Umgebungsverifikation) müssen sie als Annahmen und Behauptungen angesehen werden und überprüft werden.

Die Techniken und Methoden für die formelle Überprüfung des Funktionsmoduls 21, das mit Annahmen und Behauptungen angereichert ist, sind nicht grundlegend. Sie können vom Fachmann z.B. nach Gesichtspunkten der Effizienz gewählt und angewendet werden. Eine Methode, welche die benötigten Techniken bietet, ist z.B. die Modellprüfung (Englisch: Model Checking).

Die Wiederverwendbarkeit richtet sich an die Entwicklung von wieder verwendbaren Funktionsmodulen 21. Während der Entwicklung wird das Funktionsmodul 21 mit der Eingangsspezifikation 23, die Annahmen und Voraussetzungen über seine zukünftige Anwendung nennen, erweitert. Das zeigen die folgenden Beispiele:
- Während der Entwicklung der Stillstandserfassung könnte man die Eingangsspezifikation speed ≥ 0 hinzufügen.
- Im Beispiel SCALE in FIG 2 formalisiert die Eingangsspezifikation die zulässigen Bereiche für den IN Parameter, abhängig von der Polarität.
- Im Beispiel des Förderbands 7 könnte eine Eingangsspezifikation | precedingspeed - currentspeed | < δ genutzt werden, um eine Einschränkung der Kontrollalgorithmen auszudrücken, die innerhalb des Funktionsmoduls 21 ausgeführt werden, um auszudrücken, dass Geschwindigkeitsschwankungen den Schwellenwert δ nicht überschreiten dürfen.

Die Eingangsspezifikation 23 wird Teil des erweiterten Funktionsmoduls 22 und im verfahrenstechnischen System (z.B. dem Engineeringsystem 11 oder beim Hersteller 25) verwendet. Sie dienen dem Benutzer als eine präzise Dokumentation der geplanten Anwendung der Funktion.

Die Funktionsverifikation richtet sich an die Garantie des korrekten Verhaltens des Funktionsmoduls 21, die ein Hersteller anbietet. Dies kann dadurch gelöst werden, indem man die Ausgangsspezifikation 24 hinzufügt und formelle Methoden (z.B. die genannte Modellprüfung) anwendet, um automatisch die Korrektheit der Ausgangsspezifikation 24 modulo die Eingangsspezifikation 23 nachzuweisen, also bei gegebenen Eingangsbedingungen:
- Für den besagten Funktionsmodul SCALE erläutern die Ausgangsspezifikation 24, dass die OUT Parameter dem korrekt skalierten Input IN entsprechen, vorausgesetzt, dass die Eingangsspezifikation 23 eingehalten wird.
- Für die Stillstanderkennung drückt eine Ausgangsspezifikation speedmin ≤ speedset ≥ speedmax am Ende des Funktionsmoduls 21 am Laufband aus, dass nach der Ausführung des Funktionsmoduls 21 die Geschwindigkeit des verbundenen Antriebs 15 einen Wert zwischen speedmin und speedmax aufweist, wobei speedmin und speedmax der Hardwarespezifikation des Antriebs entsprechen. Der Ausgangswert speedset stelle einen Ausgangswert des Ausgangssignals 17 dar.

Die Nutzung der Eingangs- und Ausgangsspezifikationen 23, 24 ermöglicht, das Problem der Verifikation automatisch zu lösen: Wenn der entwickelnde Ingenieur einmal das Funktionsmodul 21 mit Eingangs- und Ausgangsspezifikationen 23, 24 erweitert hat, kann z.B. eine Methode der Modellprüfung durch einen Modellprüfer 27 angewendet werden, um die Korrektheit der Ausgangsspezifikationen 24 nachzuweisen unter der Annahme, dass die Eingangsspezifikation 23 erfüllt ist. Dies funktioniert wie folgt:
1. Alle Eingangsspezifikationen werden als Annahmen angesehen.
2. Alle Ausgangsspezifikationen werden als Behauptungen angesehen.
3. Der Funktionscode des Funktionsmoduls 21 wird zusammen mit den Annahmen und Behauptungen dem Modellprüfer 27 zugeführt.

Wenn der Modellprüfer erfolgreich war, ist damit mathematisch belegt, dass sich der Funktionsmodul 21 mittels der Ausgangsspezifikationen 24 wie beschrieben verhält solange er in Abstimmung mit den Eingangsspezifikationen 23 genutzt wird. Falls das Engineeringsystem 11 also einen Modellprüfer 27 aufweist, kann dann automatisch die Korrektheit der Ausgangsspezifikationen 24 wiederholt nachgewiesen werden. Auf diese Weise kann der Beleg zur Korrektheit vom Benutzer automatisch wiederholt werden, um die Korrektheit des Funktionscodes des Funktionsmoduls 21, das er z.B. eingekauft oder erworben hat, nachzuweisen.

Fig. 3 zeigt das Funktionsmodul SCALE, worin die Eingangsspezifikationen 23 als Annahmen und die Ausgangsspezifikationen 24 als Behauptungen interpretiert werden. Dieses derart gebildete Modulmodell 28 wird dem Modellprüfer 27 übergeben, der belegt, dass die Ausgangsspezifikationen 24 (d.h. die Behauptungen) erfüllt werden, indem man das Funktionsmodul 21 ausführt und dabei alle Eingangsspezifikationen 23 (d.h. Behauptungen) erfüllt sind.

Das Bereitstellen einer Funktionsverifikation kann somit wie folgt erfolgen:
- Der Entwickler kann die Annahmen, die er während der Codeentwicklung (Eingangsspezifikationen 23) macht, klar benennen.
- Der Entwickler kann das Codeverhalten, das er entwickelt (Ausgangsspezifikationen 24) klar benennen.
- Ein Modellprüfer beim Hersteller 25 ermöglicht dem Entwickler, die Korrektheit des Funktionscodes zu beweisen, bevor es dem Benutzern geliefert wird.
- Der Entwickler kann denjenigen Benutzern, die sich absolut auf die Ausgangsspezifikationen 24 verlassen, das erweiterte Funktionsmodul 22 liefern. Außerdem können die Benutzer einen Modellprüfer 27 selbst anwenden, um die Produktspezifikation (Eingangs- und Ausgangsspezifikation 23, 24) des Entwicklers über den Funktionscode nachzuweisen.
- Digital unterzeichnete Zertifikate 26 einer erfolgreichen Überprüfung der Ausgangsspezifikationen 24 können automatisch bereitgestellt werden, womit die Korrektheit dem Benutzern bewiesen wird.

Eine Umgebungsprüfung oder Umgebungsverifikation berücksichtigt die Benutzung eines erweiterten Funktionsmoduls 22 durch einen Benutzer innerhalb eines spezifischen Projekts, d.h. innerhalb einer vorgegebenen Anlage 1. Wie beschrieben, ermöglichen die Ausgangs- und Eingangsspezifikationen 23, 24 dem Benutzer die Korrektheit des Funktionscodes, den er erworben oder gekauft hat, nachzuweisen. Was bei der Umgebungsprüfung noch ausbleibt, ist, wie der Benutzer nachweisen kann, dass er das eingekaufte oder erworbene Funktionsmodul 21 in seiner Anlage 1 korrekt verwendet, d.h. an der Eingangsschnittstelle 19 nur oder ausschließlich Eingangssignale gemäß der Eingangsspezifikation 23 von der Anlage erzeugt werden.

Dies kann wie folgt (z.B. mittels des Engineeringsystems 27) automatisiert durchgeführt werden. Es wird kein Benutzer benötigt:
1. Die Eingangsspezifikationen 23 des Funktionsmoduls 21 wird als Behauptungen interpretiert.
2. Alle Ausgangsspezifikationen können entfernt werden.
3. Das Projekt des Benutzers (d.h. die Anlagenkonfiguration oder Anlagenspezifikation) wird als Anlagemodell 29 zusammen mit dem erweiterten Funktionsmodul 22 dem Modellprüfer 27 übergeben, um zu überprüfen, dass der umgebene Code niemals gegen die Eingangsspezifikationen 23 verstößt. Da dies in der Modellprüfung 27 voll automatisiert werden kann, benötigt der Benutzer kein Hintergrundwissen bezüglich des formellen Nachweises.

Jede Eingangsspezifikation 23, gegen die verstoßen wird, entspricht einer ungeplanten Nutzung oder Verwendung des erworbenen erweiterten Funktionsmoduls 22 und wird als fehlerhafter Nachweisdurchlauf oder Falschnutzung berichtet. In diesem Fall kann der Modellprüfer 27 ein Gegenbeispiel signalisieren, das einen Durchlauf beschreibt, der zu einem Verstoß der Eingangsspezifikation 23 des Funktionsmoduls führt. Auf diese Weise hilft die Umgebungsverifikation dem Benutzer auch dabei, eine inkorrekte Verwendung eines erweiterten Funktionsmoduls 22 zu erkennen. Folgende Beispiele veranschaulichen dies:
1. Die Eingangsspezifikation speed ≥ 0 des Funktionsmoduls für die Stillstanderkennung wird in eine Behauptung umgewandelt und die Ausgangsspezifikation speedmin ≤ speedset ≤ speedmax wird entfernt. Nachfolgend wird das vollständige Benutzerprojekt überprüft, indem man die Funktion der Stillstanderkennung so nutzt. Dies stimmt mit dem Beleg überein, dass die Stillstandfunktion nur nicht-negative Geschwindigkeitswerte speed von der Anlage empfängt. Wenn die Funktion nicht korrekt verwendet wird, produziert der Modellprüfer 27 ein Gegenbeispiel, das die inkorrekte Nutzung eines Stillstanderkennungscodes, z.B. einen Aufruf mit einem negativen Wert im Parameter speed, beschreibt.
2. Die erweiterte Version der Funktion SCALE ist in FIG 4 noch einmal veranschaulicht: die Eingangsspezifikation 23 wird in eine Annahme umgewandelt, während die Ausgangsspezifikation 24 entfernt wird. Jetzt kann für die Anlagenkomponente 13, die die Funktion SCALE benutzt, nachgewiesen werden, dass die Inputparameter korrekt erzeugt werden.

Die Eingangsspezifikation 23 und die Ausgangsspezifikation 24 sind bevorzugt als Prädikatenlogik formuliert. Eine gewichtungsfreie Prädikatenlogik (FO-Formel) für die Variablen anzuwenden, ermöglicht es, Eingangs- und Ausgangsspezifikationen für ein Funktionsmodul zu definieren, um festzulegen:
1) das Funktionsmodulverhalten und
2) die Voraussetzungen an das übrige PLC-Programms (d.h. der Umgebung), die erfüllt sein müssen, damit der Funktionsmodul korrekt funktioniert.

Die Nutzung der FO-Formeln zur Spezifizierung der Schnittstelle des Funktionsmoduls mit dem übrigen PLC-Programm ermöglicht es, Methoden zur Modellprüfung anzuwenden (z.B. verbundene Modellprüfungen oder die Gegenbeispiel-geleitete Entnahme) um die Gültigkeit der Schnittstelle automatisch nachzuweisen.

Methoden, die den grundlegenden Nachweisprozess beschleunigen, sind aber nicht grundlegend für die Erfindungsmeldung; sie können vom Fachmann nach Bedarf aus den im Stand der Technik verfügbaren Methoden ausgewählt werden. Stattdessen richtet das beschriebene Verfahren darauf, eine Modellprüfung und die Definition von Eingangs- und Ausgangsspezifikationen zu benutzen, um die Schnittstellen und das Verhalten eines Funktionsmoduls zu beschreiben.

Anwendungsmöglichkeiten einer Eingangs- und Ausgangsspezifikation, um die Schnittstelle des Funktionsmoduls zu formalisieren, sind insbesondere die folgenden:
1. Während der Entwicklung einer wiederverwendbaren Funktion werden Eingangsspezifikationen eingesetzt, um die Inputs einzuschränken, sodass die Funktion wie erwartet funktioniert (z.B. zulässige Geschwindigkeit, Spannung oder Temperaturintervalle). Das Verhalten, das die Funktion einhalten muss, wird durch eine Ausgangsspezifikation am Ende der Funktion spezifiziert, wodurch der angewandte Input mit dem erwarteten Output in Verbindung steht. Auf diese Weise spezifizieren die Ausgangsspezifikationen den Effekt bei Ausführung der Funktion und formalisieren ihr Verhalten.
   Das Finden und Benennen einer Eingangs- und Ausgangsspezifikation wird heutzutage dagegen dadurch erledigt, dass die Dokumentation (d.h. ein Handbuch) der Funktion geschrieben wird. Das beschriebene Verfahren stellt dagegen die Eingangs- und Ausgangsspezifikationen maschinell lesbar bereit und erlaubt somit eine automatische Verifikation.
2. Der Entwickler kann dann die Gültigkeit seiner eigenen Produktbeschreibung nachweisen: Dazu betreibt er einen Modellprüfer, der die Behauptungen, die er bezüglich des Verhaltens des Funktionsmoduls gemacht hat, beweist oder widerlegt. Dieser Schritt ist voll automatisiert. Wenn eine Behauptung bemängelt werden kann, berichtet der Modellprüfer ein entsprechendes Gegenbeispiel. Andernfalls ist der Beweis erfolgreich und die Funktion verhält sich garantiert gemäß der Spezifikation (z.B. ausgedrückt als Behauptungen) solange die Annahmen mit den zulässigen Inputwerten vom umgebenen Code ausgeführt werden.
3. Die erweiterte Funktion 22 wird dem Benutzer geliefert, in dem Beispiel also dem Benutzer der Anlage 1.
4. Der Benutzer kann die Eingangs- und Ausgangsspezifikationen der erlangten Funktionen auf zwei Arten und Weisen benutzen:
   a. um nachzuweisen, dass die Funktion, die er erworben hat, vollständig korrekt ist. Dies ist wesentlich für das Know-How der geschützten Funktionen, bei denen der Benutzer keinen Zugriff zum aktuellen Quellencode hat.
   b. um zu kontrollieren, dass die Funktion in der spezifischen Anlage korrekt verwendet wird, z.B. dass alle an die Funktion übergebenen Parameterwerte den Eingangsspezifikationen der Funktionen entsprechen.

Insgesamt zeigt das Beispiel, wie durch die Erfindung ein Verfahren und ein System zur Erweiterung und Verifizierung insbesondere von IEC61131-Funktionen durch Schnittstellenspezifikationen bereitgestellt werden kann.

### Bezugszeichenliste

- 1: Anlage
- 2: Prozess
- 3: Anlagenfeld
- 4: Anlagenkomponente
- 5: Anlagenkomponente
- 6: Förderband
- 7: Förderband
- 8: Stückgut
- 9: Förderrichtung
- 10: Kommunikationseinrichtung
- 11: Engineeringsystem
- 11': Analyseeinrichtung
- 12: Speicherprogrammierbare Steuerung
- 13: Speicherprogrammierbare Steuerung
- 14: Antriebsmotor
- 15: Antriebsmotor
- 16: Statusignal
- 17: Steuersignal
- 18: Funktionsmodul
- 19: Eingangsschnittstelle
- 20: Ausgangsschnittstelle
- 21: Funktionsmodul
- 22: Erweitertes Funktionsmodul
- 23: Eingangsspezifikation
- 24: Ausgangsspezifikation
- 25: Hersteller
- 26: Digitales Zertifikat
- 27: Modelprüfer
- 28: Modulmodell
- 29: Anlagenmodell

## Patentansprüche

1. Verfahren zum Überprüfen einer Kompatibilität eines Funktionsmoduls (21) für eine Anlage (1) zur Prozessautomatisierung, wobei das Funktionsmodul (21) dazu ausgelegt ist, über eine Eingangsschnittstelle (19) zumindest ein Eingangssignal (16) von der Anlage (1) zu empfangen und in Abhängigkeit von dem zumindest einen Eingangssignal (16) zumindest ein Ausgangssignal (17) zu erzeugen und über eine Ausgangsschnittstelle (20) an die Anlage (1) auszugeben,
**dadurch gekennzeichnet, dass**
- für die Eingangsschnittstelle (19) eine Eingangsspezifikation (23) bereitgestellt wird, welche für das zumindest eine Eingangssignal (16) alle jeweils von dem Funktionsmodul (21) als gültig akzeptierten Eingangswerte angibt, und
- für die Ausgangsschnittstelle (20) eine Ausgangsspezifikation (24) bereitgestellt wird, welche für das zumindest eine Ausgangssignal (17) alle jeweils von dem Funktionsmodul (21) bei erfüllter Eingangsspezifikation (23) bestimmungsgemäß vorgesehenen Ausgangswerte angibt,
- vor einem Betreiben des Funktionsmoduls (21) an der Anlage (1) durch eine Analyseeinrichtung (11') überprüft wird, ob durch das Funktionsmodul (21) für jedes gemäß der Eingangsspezifikation (23) an der Eingangsschnittstelle (19) erzeugte Eingangssignal (16) an der Ausgangsschnittstelle (20) das zumindest eine Ausgangssignal (17) ausschließlich gemäß der Ausgangsspezifikation (24) erzeugt wird, und, falls zumindest ein Ausgangswert des zumindest einen Ausgangssignals (17) die Ausgangsspezifikation (24) verletzt, durch die Analyseeinrichtung (11') ein Modulfehler signalisiert wird,
wobei durch die Analyseeinrichtung (11') überprüft wird, ob das zumindest eine durch die Anlage (1) an der Eingangsschnittstelle (19) erzeugte Eingangssignal (16) die Eingangsspezifikation (23) erfüllt, und, falls zumindest ein Eingangswert des zumindest einen Eingangssignals (16) die Eingangsspezifikation (23) verletzt, eine Falschnutzung des Funktionsmoduls (21) signalisiert wird.

2. Verfahren nach einem der vorhergehenden Ansprüche, wobei die Eingangsspezifikation (23) und/oder die Ausgangsspezifikation (24) jeweils als Prädikatenlogik, insbesondere als eine Prädikatenlogik erster Ordnung und/oder qantorfreie Prädikatenlogik, bereitgestellt wird.

3. Verfahren nach einem der vorhergehenden Ansprüche, wobei als Modulfehler ein Gegenbeispiel ausgegeben wird, welches für das zumindest eine Eingangssignal (16) den jeweiligen Eingangswert angibt, welcher den zumindest einen Ausgangswert ergibt, durch welchen die Ausgangsspezifikation (24) verletzt wird.

4. Verfahren nach einem der vorherigen Ansprüche, wobei zum Signalisieren der Falschnutzung derjenige Anlagenzustand signalisiert wird, in welchem der zumindest eine die Eingangsspezifikation (23) verletzende Eingangswert von der Anlage (1) erzeugt wird.

5. Verfahren nach einem der vorherigen Ansprüche, wobei durch die Analyseeinrichtung (11') auf der Grundlage einer Anlagenkonfiguration von Anlagenkomponenten (4) der Anlage (1) ein Anlagenmodell (29), welches ein Anlagenverhalten an der Eingangsschnittstelle (19) nachbildet, gebildet wird und die Falschnutzung auf der Grundlage des Anlagenmodells (29) mittels einer Modellprüfung (27) ermittelt wird.

6. Engineeringsystem (11) zum Konfigurieren einer Anlage (1) zur Prozessautomatisierung, wobei das Engineeringsystem (11') eine Analyseeinrichtung (11') aufweist, die dazu ausgelegt ist, ein Verfahren nach einem der vorhergehenden Ansprüche durchzuführen.

## Claims

1. Method of checking a compatibility of a functional module (21) for an installation (1) for process automation, wherein the functional module (21) is designed to use an input interface (19) to receive at least one input signal (16) from the installation (1) and to take the at least one input signal (16) as a basis for producing at least one output signal (17) and to use an output interface (20) to output said output signal to the installation (1),
**characterized in that**
- an input specification (23) is provided for the input interface (19), which input specification indicates for the at least one input signal (16) all input values that the functional module (21) respectively accepts as valid, and
- an output specification (24) is provided for the output interface (20), which output specification indicates for the at least one output signal (17) all output values that the functional module (21) respectively provides as intended when the input specification (23) is fulfilled,
- operation of the functional module (21) on the installation (1) is preceded by an analysis device (11') checking whether the functional module (21) produces, for each input signal (16) produced on the input interface (19) in accordance with the input specification (23), the at least one output signal (17) on the output interface (20) exclusively in accordance with the output specification (24), and, if at least one output value of the at least one output signal (17) violates the output specification (24), the analysis device (11') signals a module error,
wherein the analysis device (11') checks whether the at least one input signal (16) produced by the installation (1) on the input interface (19) fulfills the input specification (23), and, if at least one input value of the at least one input signal (16) violates the input specification (23), incorrect use of the functional module (21) is signaled.

2. Method according to either of the preceding claims, wherein the input specification (23) and/or the output specification (24) are each provided as a predicate logic, particularly as a first-order predicate logic and/or a quantifier-free predicate logic.

3. Method according to either of the preceding claims, wherein the module error that is output is a counterexample that indicates for the at least one input signal (16) the respective input value that yields the at least one output value that violates the output specification (24).

4. Method according to one of the preceding claims, wherein the incorrect use is signaled by signaling that installation state in which the at least one input value violating the input specification (23) is produced by the installation (1).

5. Method according to one of the preceding claims, wherein the analysis device (11') takes an installation configuration of installation components (4) of the installation (1) as a basis for forming an installation model (29) that reproduces an installation behavior on the input interface (19), and the incorrect use is ascertained on the basis of the installation model (29) by means of a model check (27).

6. Engineering system (11) for configuring an installation (1) for process automation, wherein the engineering system (11') has an analysis device (11') that is designed to perform a method according to one of the preceding claims.

## Revendications

1. Procédé de vérification de la compatibilité d'un module fonctionnel (21) pour un système (1) d'automatisation de processus, le module fonctionnel (21) étant adapté pour recevoir via une interface d'entrée (19) au moins un signal d'entrée (16) du système (1) et pour générer en fonction du au moins un signal d'entrée (16), et délivrer via une interface de sortie (20) au système (1), au moins un signal de sortie (17),
**caractérisé en ce que**
- une spécification d'entrée (23) est fournie pour l'interface d'entrée (19), qui spécifie pour le au moins un signal d'entrée (16) toutes les valeurs d'entrée acceptées comme valides par le module fonctionnel (21),
- une spécification de sortie (24) est fournie pour l'interface de sortie (20), qui spécifie pour le au moins un signal de sortie (17) toutes les valeurs de sortie prévues par le module fonctionnel (21) lorsque la spécification d'entrée (23) est remplie,
- avant de faire fonctionner le module fonctionnel (21) sur le système (1), il est vérifié par un dispositif d'analyse (11') si pour chaque signal d'entrée (16) généré selon la spécification d'entrée (23) à l'interface d'entrée (19), le au moins un signal de sortie (17) est généré à l'interface de sortie (20) exclusivement selon la spécification de sortie (24) par le module fonctionnel (21), et, si au moins une valeur de sortie du au moins un signal de sortie (17) viole la spécification de sortie (24), une erreur de module est signalée par le dispositif d'analyse (11'),
étant vérifié par le dispositif d'analyse (11') si le au moins un signal d'entrée (16) généré à l'interface d'entrée (19) par le système (1) remplit la spécification d'entrée (23), et, si au moins une valeur d'entrée du au moins un signal d'entrée (16) viole la spécification d'entrée (23), une mauvaise utilisation du module fonctionnel (21) étant signalée.

2. Procédé selon l'une des revendications précédentes, dans lequel la spécification d'entrée (23) et/ou la spécification de sortie (24) est chacune fournie comme logique des prédicats, en particulier comme logique des prédicats du premier ordre et/ou logique des prédicats sans quantificateurs.

3. Procédé selon l'une des revendications précédentes, dans lequel un contre-exemple est délivré comme erreur de module, qui spécifie pour le au moins un signal d'entrée (16) la valeur d'entrée respective qui donne la au moins une valeur de sortie par laquelle la spécification de sortie (24) est violée.

4. Procédé selon l'une des revendications précédentes, dans lequel, pour signaler une mauvaise utilisation, on signale l'état du système dans lequel la au moins une valeur d'entrée violant la spécification d'entrée (23) est générée par le système (1).

5. Procédé selon l'une des revendications précédentes, dans lequel un modèle de système (29) qui reproduit un comportement de système à l'interface d'entrée (19), est formé par le dispositif d'analyse (11') sur la base d'une configuration de système de composants de système (4) du système (1), et la mauvaise utilisation est déterminée sur la base du modèle de système (29) au moyen d'un test de modèle (27).

6. Système d'ingénierie (11) pour configurer un système (1) d'automatisation de processus, le système d'ingénierie (11') comprenant un dispositif d'analyse (11') adapté pour mettre en oeuvre un procédé selon l'une des revendications précédentes.
